# EUROPEAN PATENT SPECIFICATION

(11) **EP 0 608 963 B1**
(45) Date of publication and mention of the grant of the patent: **09.04.1997**
(21) Application number: 94200687.5
(22) Date of filing: 27.02.1992
(51) Int. Cl.: A01F 25/20

(54) **Device for taking out ensilage material**
Silageentnahmegerät
Appareil pour enlever de l'ensilage

(30) Priority: 01.03.1991 NL 9100384
(43) Date of publication of application: 03.08.1994
(62) Divisional of application: 92200574.9
(73) Proprietor: Trioliet Mullos B.V., NL-7581 HE Losser (NL)
(72) Inventor: Van der Plas, Nicolaas, NL-7576 WB Oldenzaal (NL)
(74) Representative: Louet Feisser, Arnold

(56) References cited:
- EP-A- 0 264 157
- DE-A- 3 644 896
- DE-U- 9 105 616
- FR-A- 2 170 276

## Description

The invention relates to a device for taking out ensilage material comprising a separating member provided with at least two saw or cutting blades, each blade being movable in its longitudinal direction, whereby the cutting blades are mutually connected at an angle by means of a flexible member adapted to be moveable against a curved guiding means located at the inner side of a portion of the flexible member.

Such device is disclosed in DE-A-3,644,896 whereby the flexible member is a drive belt to which all cutting blades are attached. The two ends of the drive belt are connected to hydraulic cylinders to exert alternating pulling forces on the drive belt so that all blades reciprocate in their longitudinal directions.

With such a device portions of ensilage material intended for animal feed are cut away one at a time from the silage heap, whereafter the portions is carried into a box-like container in order to take it to the place where the animals must be fed. During or after transport the ensilage material is mixed in order to make it suitable for dispensing to the animals.

The invention is related to the drive of the cutting blades. According to the invention further curved guiding means are present at the outer side of said portion of the flexible member, so that the flexible member can transfer a pulling force as well as a pushing force between the cutting blades.

The invention especially relates to the U-shaped cutting side of the separating member which is preferably provided with cutting blades guided along each part of the U-shaped cutting side.

The saw blades are preferably driven by a single cylinder which engages on the middle cutting blade and wherein the outer cutting blades are joined to the middel saw blade by a pressure-absorbing flexible member in order to effect the driving.

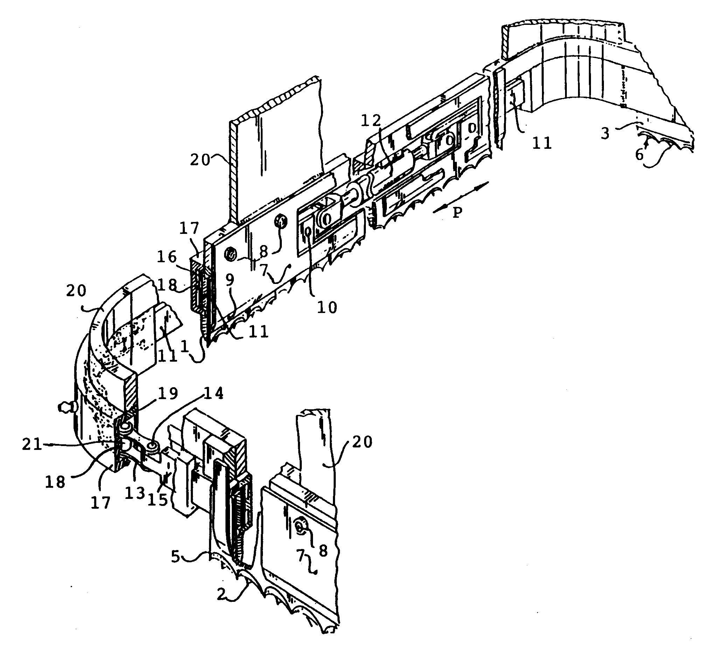

The invention is further elucidated in the figure description hereinbelow of an embodiment of the invention. The drawing shows a perspective view of a part of the U-shaped cutting edge provided with saw blades.

Three saw or cutting blades 1,2,3 are placed on the U-shaped bottom edge of a plate-like carrier 20 which forms the separating member. Arranged along these saw blades attached fixedly to the plate 20 are the saw blades 4,5,6 respectively which are movable in the direction of arrow P. These blades are held in place by a cover plate 7 which is fixedly attached to the plate 20 by bolts 8 such that with the bent bottom edge part 9 of these cover plates 7 a determined pressure is exerted on the movable saw blades 4,5,6.

It is noted that the movable saw blade 4 is situated on the inside of the U over the long side of the U-shaped cutting edge, while the blades 5,6 are situated on the outside thereof. This applies also for the associated cover plates 7.

The movable saw blade 4 is fixed with suitable fastening means 10 to a push-pull strip 11 which is connected on one side to a double-action cylinder 12 and on the other to a chain 13. This chain 13 is fixed at 14 to a push-pull strip 15 which is coupled to the movable saw blades 5 and 6.

The push-pull strips 11 and 15 are supported on the side remote from the movable saw blades by a fixed bearing strip 16 of for example copper or other friction-decreasing means which is received in the U-shaped profile 17, the bottom of which is embodied with a ridge 18. The U-shaped profile continues through the corner points with the same radius of curvature as the bent plate 20 such that with an opposing U-shaped profile 19 the chain is received precisely form-fitting in the space therebetween. The ridge 18 which is also arranged in the profile 19 herein provides an accurate guiding of the rollers 21 in the roller chain 13.

Due to this construction it is possible to drive all three movable saw blades 4,5 and 6 with only a single cylinder 12 since the roller chain 13 can transmit both pulling and pushing load.

The placing of the movable saw blade 4 on the inside and the blades 5,6 on the outside ensures that, due to the pressure forces prevailing thereon during movement of the saw blades through the ensilage material, a good co-action with the fixed saw blades 1,2,3 is brought about. As a result of the suitable material choice of the respective strips 16 and 7 a minimal friction and therefore wear of the saw blades is further ensured.

## Claims

1. Device for taking out ensilage material comprising a separating member (20) provided with at least two cutting blades (4,5,6), each being movable in its longitudinal direction, whereby the cutting blades (4,5,6) are mutually connected at an angle by means of a flexible member (13) adapted to be moveable against a curved guiding means (19) located at the inner side of a portion of the flexible member (13), characterized by further curved guilding means (17) located at the outer side of said portion of the flexible member (13), so that the flexible member can transfer a pulling force as well as a pushing force between said cutting blades.

2. Device according to claim 1, characterized in that the separating member has downward facing cutting sides in a U-shaped form, each cutting side being provided with a cutting or saw blade (4,5,6) guided slidable along the underside of the separating member, which blades (4,5,6) are mutually coupled by the means of a flexible member (13) received in the guilding means (17,19).

3. Device according to claim 1 or 2, characterized in that at least one drive cylinder (12) is coupled to the middle cutting blade.

4. Device according to any of the preceding claims, characterized in that the flexible member (13) is a chain having interconnected links.

5. Device according to claim 4, characterized in that the chain (13) is a roller chain and that the guiding means (17,19) are provided with a ridge (18) to contact and guide the rollers (21) of the chain (13).

6. Device according to any of the preceding claims, characterized in that a double acting hydraulic cylinder (12) is connected to a push-pull strip (11) to which a cutting blade (4,5,6) is attached and to which the flexible member (13) is attached for driving the other cutting blade.

7. Method for cutting ensilage material with at least two cutting blades (4,5,6), whereby a cutting blade drives the other cutting blade through a flexible member (13), whereby the flexible member (13) is moved along a curved guiding means (19) at the inner side of its curved portion, characterized in that the flexible member (13) is also guided by further curved guilding means (17,18) at the outer side of its curved portion, so that the flexible means (13) can transfer a pulling force as well as a pushing force between said cutting blades (4,5,6,).

## Patentansprüche

1. Vorrichtung zum Entnehmen von Silagematerial, die ein Trennelement (20) umfaßt, das mit wenigstens zwei Säge- oder Schneidblättern (4,5,6) versehen ist, wobei jedes Blatt in seiner Längsrichtung bewegt werden kann, wobei die Schneidblätter (4,5,6) in einem Winkel durch ein flexibles Element (13) miteinander verbunden sind, das an einer gekrümmten Führungseinrichtung (19) bewegt werden kann, die sich an der Innenseite eines Abschnitts des flexiblen Elementes (13) befindet, **gekennzeichnet durch** eine weitere gekrümmte Führungseinrichtung (17), die sich an der Außenseite des Abschnitts des flexiblen Elementes (13) befindet, so daß das flexible Element eine Zugkraft und eine Schubkraft zwischen den Schneidblättern übertragen kann.

2. Vorrichtung nach Anspruch 1, **dadurch gekennzeichnet**, daß das Trennelement nach unten gerichtete Schneidseiten in U-Form hat, wobei jede Schneidseite mit einem Schneid- bzw. Sägeblatt (4,5,6) versehen ist, die an der Unterseite des Trennelementes verschiebbar geführt werden, wobei die Blätter (4,5,6) mittels eines flexiblen Elementes (13), das in der Führungseinrichtung (17,19) aufgenommen ist, miteinander verbunden sind.

3. Vorrichtung nach Anspruch 1 oder 2, **dadurch gekennzeichnet**, daß wenigstens ein Antriebszylinder (12) mit dem mittleren Schneidblatt verbunden ist.

4. Vorrichtung nach einem der vorangehenden Ansprüche, **dadurch gekennzeichnet**, daß das flexible Element (13) eine Kette mit miteinander verbundenen Gliedern ist.

5. Vorrichtung nach Anspruch 4, **dadurch gekennzeichnet**, daß die Kette (13) eine Rollenkette ist und die Führungseinrichtungen (17,19) mit einem Steg (18) versehen sind, der mit den Rollen (21) der Kette (13) in Kontakt ist und sie führt.

6. Vorrichtung nach einem der vorangehenden Ansprüche, **dadurch gekennzeichnet**, daß ein doppelt wirkender Hydraulikzylinder (12) mit einem Schub-Zug-Band (11) verbunden ist, an dem ein Schneidblatt (4,5,6) angebracht ist, und an dem das flexible Element (13) angebracht ist, um das andere Schneidblatt zu bewegen.

7. Verfahren zum Schneiden von Silagematerial mit wenigstens zwei Schneidblättern (4,5,6), wobei ein Schneidblatt das andere Schneidblatt über ein flexibles Element (13) bewegt, wobei das flexible Element (13) an einer gekrümmten Führungseinrichtung (19) an der Innenseite seines gekrümmten Abschnitts entlangbewegt wird, **dadurch gekennzeichnet,** daß das flexible Element (13) auch durch weitere gekrümmte Führungseinrichtungen (17,18) an der Außenseite seines gekrümmten Abschnitts geführt wird, so daß die flexible Einrichtung (13) eine Zugkraft und eine Schubkraft zwischen den Schneidblättern (4,5,6) übertragen kann.

## Revendications

1. Dispositif pour enlever du produit d'ensilage, comprenant un organe de séparation (20) pourvu d'au moins deux lames de coupe (4, 5, 6), chacune étant susceptible d'être déplacée dans sa direction longitudinale, de telle sorte que les lames de coupe (4, 5, 6) soient reliées mutuellement au niveau d'un angle au moyen d'un organe flexible (13) susceptible d'être déplaçable contre des moyens de guidage incurvés (19) placés sur la face intérieure d'une partie de l'organe flexible (13), caractérisé par des moyens de guidage incurvés (17) supplémentaires, placés sur la face extérieure de ladite partie de l'organe flexible (13), de manière que l'organe flexible puisse transférer une force de traction ainsi qu'une force de poussée entre lesdites lames de coupe.

2. Dispositif selon la revendication 1, caractérisé en ce que l'organe de séparation présente des faces de coupe en forme de U et tournées vers le bas, chaque face de coupe étant pourvue d'une lame de coupe ou de scie (4, 5, 6) guidée de façon coulissante sur la face inférieure de l'organe de séparation, lesquelles lames (4, 5, 6) sont couplées mutuellement au moyen d'un organe flexible (13) logé dans les moyens de guidage (17, 19).

3. Dispositif selon la revendication 1 ou 2, caractérisé en ce qu'au moins un vérin d'entraînement (12) est couplé à la lame de coupe médiane.

4. Dispositif selon l'une quelconque des revendications précédentes, caractérisé en ce que l'organe flexible (13) est une chaîne ayant des maillons interconnectés.

5. Dispositif selon la revendication 4, caractérisé en ce que la chaîne (13) est une chaîne à rouleaux, et en ce que les moyens de guidage (17, 19) sont pourvus d'une nervure (18) destinée à venir en contact avec et à guider les rouleaux (21) de la chaîne (13).

6. Dispositif selon l'une quelconque des revendications précédentes, caractérisé en ce qu'un verin hydraulique (12) à double action est relié à une bande de poussée-traction (11), à laquelle une lame de coupe (4, 5, 6) est fixée et à laquelle l'organe flexible (13) est fixée pour assurer l'entraînement de l'autre lame de coupe.

7. Procédé pour découper du matériau d'ensilage avec au moins deux lames de coupe (4, 5, 6), des manière qu'une première lame de coupe entraîne l,autre lame de coupe par l'intermédiaire d'un organe flexible (13), de telle sorte que l'organe flexible (13) soit déplacé le long de moyens de guidage incurvés (19), sur la face intérieure de sa partie incurvée, caractérisé en ce que l'organe flexible (13) est également guidé par des moyens de guidage incurvés (17, 18) supplémentaires, placés sur la face extérieure de sa partie incurvée, de sortes que les moyens flexibles (13) puissent transférer une force de traction ainsi qu'une force de poussée entre lesdites lames de coupe (4, 5, 6).
